# NEW EUROPEAN PATENT SPECIFICATION

(11) **EP 2 051 576 B2**
(45) Date of publication and mention of the opposition decision: **23.11.2016**
(45) Mention of the grant of the patent: 13.03.2013
(21) Application number: 07789120.8
(22) Date of filing: 03.08.2007
(51) Int. Cl.: A01B 49/06

(54) **IMPROVED SEED DRILL**
VERBESSERTE SÄMASCHINE
SEMOIR PERFECTIONNÉ

(30) Priority: 05.08.2006 GB 0615581
(43) Date of publication of application: 29.04.2009
(60) Divisional application: 11172093.4
(73) Proprietor: Claydon, Jeffrey Thomas, Newmarket, Suffolk CB8 7YA (GB)
(72) Inventor: Claydon, Jeffrey Thomas, Newmarket, Suffolk CB8 7YA (GB)
(74) Representative: Willett, Christopher David
(86) International application number: PCT/GB2007/002983
(87) International publication number: WO 2008/017822

(56) References cited:
- EP-A- 0 136 165
- WO-A-98/03053
- WO-A-2004/000004
- WO-A-2004/086849
- CA-A1- 2 224 854
- DE-A1- 2 824 978
- DE-A1- 3 805 925
- DE-A1- 19 756 720
- DE-U1- 9 422 134
- US-A- 4 244 306
- US-B1- 6 688 243

## Description

### Field of Invention

The invention relates to a new apparatus for cultivating land and planting seed to produce crops.

### Background to the Invention

It is known to cultivate land (which may have previously been ploughed) and then sow seed into the cultivated soil in a plurality of spaced apart lines using conventional seed drilling apparatus that is pulled by, or attached to, a tractor.

WO 2004/086849 discloses an improved seed drill which sows seed from seeding tines in rows directly behind digging tines, thus leaving uncultivated land in between the cultivated and seeded lines.

The present invention concerns further improvements to the design of the seed drill disclosed in WO 2004/086849.

WO2004/000004 and CA 2,224,854 disclose devices for depositing seed in rows.

### Summary of Invention

The invention provides an apparatus for cultivating soil and sowing seed, comprising:
(a) a first frame carrying a row of digging tines, adapted in use to be towed by, or attached to the rear of, a tractor,
(b) a second frame, moveably attached to the first frame, carrying a row of seeding tines, each of the seeding tines being aligned with one of the tines on the first frame and spaced therefrom in a direction parallel to the direction of forward motion of the apparatus when in use, and comprising depth wheels which in use travel along the surface of the soil,
wherein the seeding depth is governed by the position of the depth wheels relative to the second frame and the depth of the digging tines is independently adjustable in relation to the depth of the seeding tines and the digging tines each comprise a knife tine and form a primary passage or trench for the following seeding tines, creating drainage, removing compaction and aerating the soil in use.

Thus, the seeding depth can be pre-set to a fixed depth by the position of the depth wheels, whilst the depth of the digging tines can be adjusted independently according to the needs of the soil. Additionally, because the seeding tines are not rigidly connected to the first frame, there is less weight to disturb the seed depth, resulting in less variation in seeding depth.

In one arrangement the second frame is hingedly attached to the first frame. Preferably the frames are hingedly attached by a plurality of intervening rigid links, each hingedly attached to both the first and second frames. Typically the rigid links are of the same length and are parallel to each other, such that the movement of the second frame relative to the first frame is restricted, typically maintaining the frames parallel to each other whilst allowing for a variable difference in height from the ground.

Where the apparatus is to be carried on a 3-point linkage of a tractor, the front of the first frame is attached to the lower links of the 3-point linkage. The height and inclination of the first frame is adjustable by altering the height of the lower links of the 3-point linkage. Typically the first frame is also attached via an adjustable length strut to the upper point of attachment of the 3-point linkage. Thus, the digging depth of the first tines can be adjusted by moving the 3-part linkage, which can be achieved from inside the tractor cab.

The inventors have also found that it may be advantageous to operate with two rows of digging tines and two rows of seeding tines, particularly if the lateral spacing between the seeded lines is to be less than the minimum lateral spacing possible between adjacent tines.

Preferably, the second row of digging tines are positioned midway between the tines in the first row of digging tines.

The frame means comprise two frames which can be independently raised or lowered. It is preferable that the two rows of digging tines are carried by one of the frames and the two rows of seeding tines are carried by the other of the frames.

Each of the first and/or second rows of seeding tine may also be independently adjustable for depth of work. Each may be fitted with an 'A hoe' with a seed spreader outlet to sow seed across the width of the trench to whatever level the seeding tine penetrates.

Typically this width is of the order 150mm, so that the seed can be thought of as being sown in spaced apart strips normally 150mm wide.

In the invention the lateral spacing of the tines is typically of the order of 300mm so that the result will be 150mm wide seeded strips separated by 150mm wide unseeded strips.

If the lateral spacing of the digging tines in each row of digging tines in the apparatus constructed in accordance with the invention is 600mm, and the tines in the second row of digging tines are positioned midway between those in the first row of digging tines, the result will again be 150mm wide seeded strips, separated by 150mm wide unseeded strips. In this example, the invention allows for the same cultivated soil, but with more widely spaced tines along each row, giving more room for any associated equipment.

If the lateral spacing between tines in each row is not an issue, then, in the apparatus constructed in accordance with the invention, the tines can be located closer together, such that there is e.g. 400mm between tines so that the seeded trenches are now spaced apart by 50mm strips of uncultivated soil.

Each row of tines may extend transversely to the direction of forward travel of the frame means or may comprise a V formation with the vertex of the V pointing in the direction of forward motion of the apparatus.

Each of the tines in the first and/or second row of digging tines each comprises a knife tine. Preferably each such tine can be adjusted independently for depth of work.

Such tines break the soil to the desired depth, create drainage, remove compaction and aerate the soil, which is essential for healthy crop growth. Because of their narrow design each such tine cuts through even heavy loam and clay and forms a primary passage or trench for the following seeding tine which carries the seed delivery means for that trench.

Where the apparatus of the invention is used on cropped land where stubble or other crop residue remains in the soil, the latter will remain in the unseeded strips and be added to by the trenching action of the tines. These unseeded strips will constitute conservation bands between the cultivated and seeded strips, in that each digging tine in the first row creates a path for each following seeding tine. The apparatus of the invention has the advantage of moving the crop residue such as straw and stubble onto the soil between the seeded lines. This acts as a mulch, and further enhances weed control with the added advantage that the crop residue retains soil moisture.

This is a considerable advantage on lighter soils that can burn off in dry seasons. However the invention is equally applicable to heavier soils since the local break up and resulting aeration and drainage created by the digging tines, below the seed depth, assists in the germination and subsequent growth of the seeds.

If the soil contains any moveable stones then these will also be moved onto the soil between the seeded lines.

These advantages are in the invention, as it has been found that the presence of additional straw and stubble on the uncultivated strips left by the first row of digging and seeding tines does not present problems when the second row of digging and seeding tines pass through. The latter simply move the straw and stubble onto the uncultivated soil between the seeded lines. Additionally, the laterally spaced tines in the second row of digging tines displace any moveable stones out of the path of the following seeding tines, even if these were initially positioned there by the action of the first row of digging tines.

To obtain the best mulching effect when using the invention, it is advantageous to finely chop previous crop residue such as straw into chaff, and to spread the chaff evenly over the ground, as or immediately after the previous crop is harvested.

Leaving the stubble and not ploughing does allow seed from a previous crop as well as weed seeds to germinate, but these can be sprayed off with a contact herbicide.

Where seed is to be sown near the top of the trench the seeding tines may be spring tines the lower ends of which include lateral wings to form an A hoe to lift the soil prior to the seed being delivered. Typically the springs are S-shaped.

Compaction of the soil after sowing gives good seed to soil contact, enhancing germination and reducing slug damage. This may be achieved by levelling means (e.g., wheels) aligned with and following the seeding tines.

Where wheels follow the tines to flatten and compact the soil, one wheel preferably follows each seeding tine, and where the seeding tines are spring tines, each wheel may be attached by a rigid arm to the centre of the S-spring, the upper part of the spring serving to exert downward force through the arm on the wheel and thereby through the wheel to the soil. As each wheel is independent an even pressure is exerted on each seeded row, unlike barrel rolls fitted on some drills.

In a preferred embodiment of the invention the wheels following the first row of seeding tines are positioned to be between the seeding tines of the second row. In this way any soil or crop residue which is thrown out by the second row of seeding tines is prevented from landing on the seeded strips sown by the first row of seeding tines.

Where the seed is to be sown at or near the bottom of each shallow trench, the seeding tines may be adjusted to penetrate to substantially the same depth as the digging tines. Typically the seeding tines in this case comprise slotter tines, and in this event the subsequent soil flattening may be achieved using wheels or more preferably by using levelling tines, one set of levelling tines for each seeding tine.

In an apparatus in which the digging tines penetrate deeper than the seeding tines, the former typically penetrate to a depth in the range 20-170mm deeper than the depth to which the seed is to be delivered.

In one arrangement, the (first) row of digging tines are stone release tines, each being independently moveable in an upwards sense, clear of any unmoveable stone, leaving the other digging tines to continue to generate their trenches in an uninterrupted manner.

The apparatus of the invention only cultivates the soil where the seed is to be planted, thereby creating a conservation tillage, by not disturbing the soil between the seeded lines. This has the advantage that weed seed in the soil between the sown lines will tend not to germinate because the soil between the lines has not been disturbed.

Where seeds such as beans are to be sown it is normally advantageous not to disturb the soil below the depth at which they are to be sown so that in that event the digging tines should not penetrate lower than the seeding tines, and advantageously may be set to penetrate to a slightly reduced depth compared to the seeding tines, to achieve this.

Delivery of the seed near the top of the trench will normally be associated with the sowing of for example wheat, oats and barley, while delivery of the seed nearer the bottom of the trench will tend to be associated with the sowing of crops such as maize and beans, which are normally sown at a greater depth.

Road wheels may be attached to the frame and adapted to be raised or lowered as required, for trailing the machine behind a tractor when the road wheels are in their lowered position.

The road wheels may be removable from the frame to reduce the weight of the machine when in use, and quick release attachment means may be provided to allow the road wheels to be mounted and demounted as required.

Raising and lowering of the wheels may be achieved by pivoting wheel support arms relative to the frame, the wheels being carried on stub axles at the ends of the arms, remote from the ends which are pivotally attached to the frame.

The invention will now be described by way of example with reference to the accompanying drawings and illustrations in which:
Figure 1 is a diagrammatic side view of an apparatus according to the invention.
Figure 2 is a diagrammatic top plan view of an apparatus according to the invention.

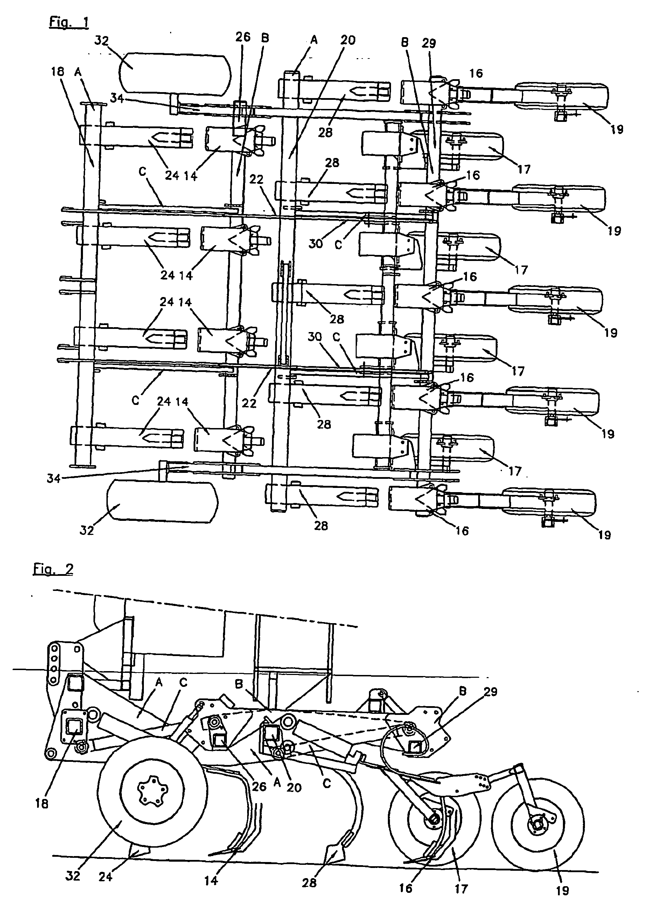

In Figures 1 and 2 a seed drill is shown embodying the invention, and comprising a seed hopper 10 from which seed is delivered by a pneumatic seed delivery system via seed delivery tubes 12 to each of a plurality of seeding tines 14, 16. The drill is attached to the 3-point hitch of a tractor (not shown).

The drill is made up of a first frame (A) connected to the 3-point hitch of a tractor (not shown) and a second frame (B) which is hingedly attached to the first frame (A) by rigid struts (C).

The first frame (A) comprises two lateral frame members 18, 20 rigidly connected together by connecting beams 22.

The second frame (B) comprises two lateral frame members 26, 29 rigidly connected together by connecting beams 30.

First row of digging tines 24 depend from lateral frame member 18. A first row of seeding tines 14 depend from lateral frame member 26. Each of the seeding tines 14 is aligned with a digging tine 18. The lateral distance between the midpoints of the digging tines 24 is 600mm. Likewise the lateral distance between the seeding tines 14 is 600mm.

A second row of digging tines 28 depend from lateral frame member 20. A second row of seeding tines 16 depend from lateral frame member 29. The digging tines 28 are positioned to be midway between the first row of digging tines 24. The seeding tines 16 are each aligned with a digging tine 28.

Wheels 17, 19 also depend from lateral frame member 29. Wheels 17 are aligned with seeding tines 14 and are positioned to lie between seeding tines 16. Wheels 19 are aligned with seeding tines 16.

Also connected to second frame (B) are depth wheels 32. The centre of the wheels is connected to a rod 34 which is slideably mounted in a slot (not shown) in frame (B). The vertical distance between the depth wheel and frame (B) can be adjusted, as desired, by moving the rod 34 in relation to the slot.

In use, the tractor pulls the drill across soil which is to be cultivated. As frame (A) is connected to the 3-point hitch, the digging depth of the tines 24, 28 can be controlled by the driver of the tractor from his cab.

During movement, the depth wheels ride on the surface of the soil and, by earlier selection of their position relative to frame (B), govern the seeding depth of tines 14, 16.

The digging tines are set to penetrate more deeply into the soil than are the seeding tines, so that disturbed soil exists both below and above the level at which the seed is delivered by the seeding tines.

Once the seed has been sown by seeding tines 14, 16 wheels 17, 19 level the soil where seed was sown. Additionally, because wheels 17 are positioned between seeding tines 16, any soil or crop residue which is thrown out by seeding tines 16 is prevented from landing on the seed sown by seeding tines 14.

Frame (B) is hingedly attached to the first tine (A) by rigid struts (C). The struts (C) are each of the same length and are parallel to each other, such that when the frames move relative to one another, they maintain the same orientation relative to each other, e.g., by remaining parallel to each other.

Thus, the tractor driver can alter the depth of the digging tines as desired, whilst maintaining a constant seeding depth.

It can therefore be seen that only frame (B) acts on the seeding tines, and the weight of frame (A) cannot disturb the seeding process. As a result, the seeding depth is more reliably controlled.

Digging tines 24 each create a line of cultivated soil with a width of 150mm, leaving an uncultivated strip of about 450mm after passage of the first rows of digging and seeding tines.

The second row of digging tines creates a line of cultivated soil with a width of 150mm in the middle of the 450mm uncultivated strips. Thus, after passage of all four rows of tines, the land is left as cultivated strips of 150mm separated by uncultivated strips of 150mm.

## Claims

1. An apparatus for cultivating soil and sowing seed, comprising:
(a) a first frame (A) carrying a row of digging tines (24), adapted in use to be towed by, or attached to the rear of, a tractor,
(b) a second frame (B), moveably attached to the first frame, carrying a row of seeding tines, each of the seeding tines being aligned with one of the tines (14) on the first frame and spaced therefrom in a direction parallel to the direction of forward motion of the apparatus when in use, and comprising depth wheels (32) which in use travel along the surface of the soil,
wherein the seeding depth is governed by the position of the depth wheels relative to the second frame and the depth of the digging tines is independently adjustable in relation to the depth of the seeding tines and the digging tines each comprise a knife tine and form a primary passage or trench for the following seeding tines, creating drainage, removing compaction and aerating the soil in use.

2. An apparatus according to claim 1, wherein the second frame is hingedly attached to the first frame.

3. An apparatus according to claim 2 wherein the first and second frames are hingedly attached by a plurality of intervening rigid links (30).

4. An apparatus according to any one of the preceding claims, wherein, in use, the front of the first frame is attached to the lower links of a 3-point linkage of the tractor.

5. An apparatus according to claim 4, wherein the heightened inclination of the first frame is adjustable by altering the height of the lower links of the 3-point linkage.

## Patentansprüche

1. Vorrichtung zur Bodenbearbeitung und zum Säen mit
(a) einem ersten Rahmen (A), der eine Reihe Grabzinken (24) trägt und dazu geeignet ist, im Gebrauch von einem Traktor gezogen oder hinten an einem Traktor angebracht zu werden,
(b) einem zweiten Rahmen (B), der beweglich am ersten Rahmen angebracht ist und eine Reihe Säzinken trägt, die jeweils auf eine der Zinken (14) am ersten Rahmen ausgerichtet sind und in einer parallel zu der Vorwärtsbewegungsrichtung der sich im Gebrauch befindenden Vorrichtung verlaufenden Richtung davon beabstandet sind, und Tiefenräder (32) umfasst, die im Gebrauch auf der Bodenoberfläche entlang fahren,
wobei die Sätiefe durch die Position der Tiefenräder in Bezug auf den zweiten Rahmen bestimmt ist und die Tiefe der Grabzinken in Bezug auf die Tiefe der Säzinken unabhängig verstellbar ist und die Grabzinken jeweils eine Messerzinke umfassen und einen primären Durchgang oder Graben für die folgenden Säzinken bilden, wobei sie im Gebrauch für Drainage sorgen, Verdichtung eliminieren und den Boden belüften.

2. Vorrichtung nach Anspruch 1, wobei der zweite Rahmen gelenkig am ersten Rahmen angebracht ist.

3. Vorrichtung nach Anspruch 2, wobei der erste und der zweite Rahmen über mehrere dazwischenliegende starre Lenker (30) gelenkig verbunden sind.

4. Vorrichtung nach einem der vorhergehenden Ansprüche, wobei die Vorderseite des ersten Rahmens im Gebrauch an den unteren Lenkern eines Dreipunktgestänges des Traktors angebracht ist.

5. Vorrichtung nach Anspruch 4, wobei die gesteigerte Neigung des ersten Rahmens durch Änderung der Höhe der unteren Lenker des Dreipunktgestänges verstellbar ist.

## Revendications

1. Appareil pour cultiver le sol et planter des graines, comprenant :
(a) un premier cadre (A) portant une rangée de dents de creusement (24), prévu pour être tiré par, ou attaché à l'arrière d'un tracteur pendant l'utilisation,
(b) un deuxième cadre (B) attaché de manière mobile au premier cadre, portant une rangée de dents de semoir, chacune des dents de semoir étant alignée avec l'une des dents (14) du premier cadre et espacée de celle-ci dans une direction parallèle à la direction de mouvement d'avance de l'appareil pendant l'utilisation, et comprenant des roues de profondeur (32) qui se déplacent à la surface du sol pendant l'utilisation,
la profondeur de semis étant régie par la position des roues de profondeur par rapport au deuxième cadre et la profondeur des dents de creusement étant ajustable indépendamment par rapport à la profondeur des dents de semoir et les dents de creusement comprenant chacune une dent de couteau et formant un passage primaire ou une tranchée pour les dents de semoir suivantes, créant un drainage, éliminant la compaction et aérant le sol pendant l'utilisation.

2. Appareil selon la revendication 1, dans lequel le deuxième cadre est attaché de manière articulée au premier cadre.

3. Appareil selon la revendication 2, dans lequel les premier et deuxième cadres sont attachés de manière articulée par une pluralité de barres de liaison rigides intervenantes (30).

4. Appareil selon l'une quelconque des revendications précédentes, dans lequel pendant l'utilisation, l'avant du premier cadre est attaché aux barres de liaison inférieures d'une liaison à trois points du tracteur.

5. Appareil selon la revendication 4, dans lequel l'inclinaison accrue du premier cadre est ajustable en modifiant la hauteur des barres de liaison inférieures de la liaison à trois points.
